(19) **Europäisches Patentamt**
**European Patent Office**
**Office européen des brevets**

(11) **EP 2 127 439 B1**

(12) **EUROPEAN PATENT SPECIFICATION**

(45) Date of publication and mention
of the grant of the patent:
**31.07.2019 Bulletin 2019/31**

(51) Int Cl.:
*H04W 16/00* *(2009.01)*    *H04W 24/00* *(2009.01)*
*H04W 16/24* *(2009.01)*    *H04B 7/06* *(2006.01)*
*H01Q 1/24* *(2006.01)*     *H01Q 3/26* *(2006.01)*

(21) Application number: **08724123.8**

(22) Date of filing: **11.03.2008**

(86) International application number:
**PCT/SE2008/000191**

(87) International publication number:
**WO 2008/115115 (25.09.2008 Gazette 2008/39)**

(54) **INCREASING A SECTORIZATION ORDER IN A FIRST SECTOR OF AN ANTENNA ARRAY**

ERHÖHUNG EINER SEKTORENAUFTEILUNGSORDNUNG IN EINEM ERSTEN SEKTOR EINER ANTENNENGRUPPE

AUGMENTATION DE L'ORDRE DE SECTORIZATION DANS UN PREMIER SECTEUR D'UN GROUPE D'ANTENNES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.03.2007 SE 0700737**

(43) Date of publication of application:
**02.12.2009 Bulletin 2009/49**

(73) Proprietor: **Telefonaktiebolaget LM Ericsson (publ)**
**164 83 Stockholm (SE)**

(72) Inventors:
• **WAN, Lei**
**Beijing 100080 (CN)**

• **JÖNGREN, George**
**S-11241 Stockholm (SE)**
• **ASTELY, David**
**S-168 56 Bromma (SE)**

(74) Representative: **Brann AB**
**P.O. Box 3690**
**Drottninggatan 27**
**103 59 Stockholm (SE)**

(56) References cited:
**EP-A2- 1 519 601      WO-A1-2007/106984**
**WO-A1-2007/106989   WO-A2-2008/007375**
**US-A1- 2002 051 436   US-A1- 2005 003 763**
**US-A1- 2006 286 974   US-B1- 6 937 863**

## Description

### TECHNICAL FIELD

The present invention relates to a network node in a wireless communication system and a method therein. More particularly the present invention relates to increasing a sectorization order in a first sector of an antenna array.

### BACKGROUND

The Third Generation (3G) of wireless telecommunication standards and technologies is based on the International Telecommunication Union (ITU) family of standards under the International Mobile Telecommunications program, "IMT-2000". The 3G technologies enable network operators to offer the users a wider range of more advanced services while achieving greater network capacity through improved spectral efficiency. The services include wide-area wireless voice telephony, high-speed internet access, video telephony and broadband wireless data, all in a mobile environment. Typically, they provide service at 5-10 Mb per second.
The IMT-2000 comprises several radio interfaces such as e.g. Wideband Code Division Multiple Access (W-CDMA), Code Division Multiple Access (CDMA2000), Time Division-Synchronous Code Division Multiple Access (TD-SCDMA) and Digital Enhanced Cordless Telecommunications (DECT).

TD-SCDMA is also called the low-chip-rate (LCR) Universal Terrestrial Radio Access (UTRA) Time Division Duplex (TDD). It has been adopted by 3rd Generation Partnership Project (3GPP) as part of Universal Mobile Telecommunications System (UMTS) release 4, becoming in this way a global standard, which covers all radio deployment scenarios, from rural to dense urban areas, from pico to micro and macro cells, from pedestrian to high mobility. TD-SCDMA uses Time Division Duplexing (TDD). By dynamically adjusting the number of timeslots used for downlink and uplink, the system can more easily accommodate asymmetric traffic with different data rate requirements on downlink and uplink than Frequency Division Duplex (FDD) schemes. Since TDD does not require paired spectrum for downlink and uplink, spectrum allocation flexibility is also increased. Also, using the same carrier frequency for uplink and downlink means that the channel condition is the same on both directions, and the base station can deduce the downlink channel information from uplink channel estimates. The "S" in TD-SCDMA stands for "synchronous", which means that uplink signals are synchronized at the base station receiver, achieved by continuous timing adjustments. This reduces the interference between users of the same timeslot using different codes by improving the orthogonality between the codes, therefore increasing system capacity.
TD-SCDMA may be used for supporting huge sport events, such as e.g. the Olympic Games. The network deployments adopt smart antenna technology with typically eight antenna elements in each sector and most of them are configured with three sectors per site. As a key technology in TD-SCDMA to reach high coverage of the data transmission, beam forming characterized by single-stream transmission with user-specific beam adaptation based on the closely spaced antenna array is used. US 2006/286974 A1 describes enhancing the performance in a wireless communication system using beamforming transmission. US 2002/051436 A1 describes the use of wide element spacing to improve the flexibility of a circular base station antenna array. The next step in wireless communications is the Fourth-Generation Communications System (4G) which is also known as Beyond the Third Generation (B3G). A 4G system will be able to provide a comprehensive Internet Protocol (IP) solution where voice, data and streamed multimedia can be given to users on an "Anytime, Anywhere" basis, and at higher data rates than previous generations. There are certain objectives that are projected for 4G, such as that 4G will be a fully IP-based integrated system. This will be achieved after wired and wireless technologies converge and will be capable of providing between 100 Mbit/s and 1 Gbit/s speeds both indoors and outdoors, with premium quality and high security. 4G will offer all types of services at an affordable cost.
Moving towards 4G, quite many different multi-antenna technologies are discussed and evaluated as pre-4G wireless systems, such as e.g. 3GPP Long-Term Evolution of UMTS (LTE) and Wireless INitiative NEw Radio (WINNER). In contributions to the 3rd Generation Partnership Project (3GPP) multi-antenna schemes with more adaptivity at the transmitter may result in more serious variation of the inter-cell interference at high load scenarios, i.e. suffers more from the feedback delay, due to the multi-user scheduler and user-specific transmission weights or power. In addition, the beam forming and/or precoding schemes suffers a lot from the non-stationary interference, comparing to some more robust Multiple-Input Multiple-Output (MIMO) schemes, such as e.g. Per Antenna Rate Control (PARC). Accordingly, the same problem exists in TD-SCDMA system and any other systems with beam forming. Further, as of today, LTE defines up to four reference signals using four antenna elements per sector cell. The extension to even more antennas per sector may be troublesome since it could require even more reference signals per sector which would require more overhead. This will most probably complicate mobility management and quality measurements for adaptation. Thus the support of more than four antennas per sector may pose certain problems if antenna common pilots are used.

The transition from the 3G antenna systems with more than four antennas, such as e.g. the 3G TD-SCDMA, to the four antenna systems of 4G, such as e.g. LTE, may be challenging due to the fact that it may also require that the physical antennas are exchanged in order for the four antenna system of 4G to operate properly. This would involve high costs due to labor costs and hardware purchases.

## SUMMARY

It is therefore an object of the present invention to provide a method and arrangement enabling a smooth and less costly transition from a 3G system such as TD-SCDMA, to a 4G system such as LTE.

According to a first aspect of the present invention, the object is achieved by a method in a network node for increasing a sectorization order in a first sector of an antenna array. The antenna array is deployed with a first sectorization. The network node and antenna array are comprised in a wireless communication system. The network node comprises a first number of signal connections. Each signal connection is adapted to transmit and receive signals. The method comprises the step of splitting the first number of connections into a number of groups wherein each one of the respective connection groups corresponds to one respective virtual sector resulting in a number of virtual sectors. The method comprises the further step of mapping the number of virtual sectors to the first sector such that the first sector is split into the number of virtual sectors.

According to a second aspect of the present invention, the object is achieved by a network node. The network node and antenna array are comprised in a wireless communication system. The antenna array is deployed with a first sectorization. The network node is adapted to be connected to the antenna array. The network node comprises a first number of signal connections. Each signal connection is adapted to transmit and/or receive signals. The network node further comprises a splitting unit adapted to split the first number of connections into a number of groups. Each one of the respective connection groups corresponds to one respective virtual sector. This results in a number of virtual sectors. The network node also comprises a mapping unit adapted to map the number of virtual sectors to the first sector. The mapping is performed such that the first sector is split into the number of virtual sectors.

Since the existing antenna elements in the wireless communication system are re-used when splitting the existing physical sector with more than four transmit antenna elements, to two or more smaller virtual sectors, each virtual sector having fewer transmit antenna elements, the costly and cumbersome exchange of antenna elements due to the wireless communication migration from 3G to 4G may be avoided.

An advantage of the present invention is that the system capacity and the coverage are remarkably improved as a result of the separation of the sectors which increases the resource upper bound by almost the double.

A further advantage of the present invention is that the system robustness is improved against the feedback delay and the non-stationary interference by generating less varying interference.

A yet further advantage of the present invention is that re-use of installed antenna elements at a base station is easy to upgrade.

## BRIEF DESCRIPTION OF THE DRAWINGS

The present invention will now be described more in detail in relation to the enclosed drawings, in which:

Figure 1      is a block diagram illustrating embodiments of a wireless communication network.

Figure 2      is a block diagram illustrating embodiments of an antenna array.

Figure 3      is a block diagram illustrating embodiments of a network node.

Figure 4a     is a block diagram illustrating embodiments of a wireless communication network as seen from above.

Figure 4b     is a block diagram illustrating embodiments of a wireless communication network as seen from above.

Figure 5a     is a block diagram illustrating embodiments of a wireless communication network as seen from above.

Figure 5b     is a block diagram illustrating embodiments of a wireless communication network as seen from above.

Figure 6      is a flow chart illustrating method steps according to embodiments of the present solution.

Figure 7      is a flow chart illustrating method steps according to embodiments of the present solution.

Figure 8      is a block diagram illustration embodiments of a network node.

**DETAILED DESCRIPTION**

The invention is defined as a network node in a wireless communication system and a method therein, which may be put into practice in the embodiments described below.

This invention may, however, be embodied in many different forms and should not be construed as limited to the embodiments set forth herein; rather, these embodiments are provided so that this disclosure will be thorough and complete, and will fully convey the scope of the invention to those skilled in the art. It should be understood that there is no intent to limit the present method or arrangement to any of the particular forms disclosed, but on the contrary, the present method and arrangement is to cover all modifications, equivalents, and alternatives falling within the scope of the invention as defined by the claims.

When using the word "comprise" or "comprising" it shall be interpreted as nonlimiting, in the meaning of "consist at least of". The solution is defined as methods and arrangements which may be put into practice in the embodiments below.

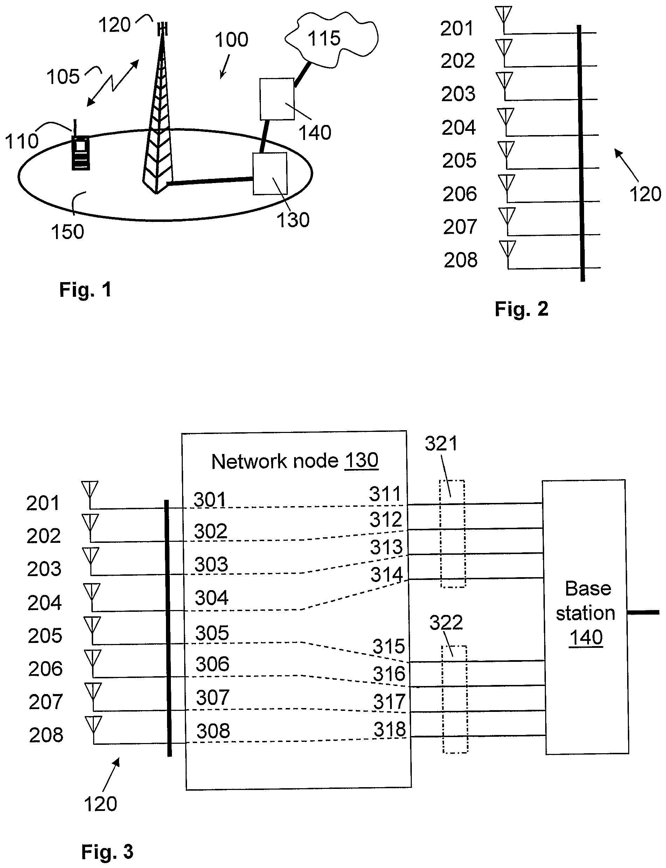

**Figure 1** discloses a wireless communication system 100 according to the present solution. The wireless communication system 100 is adapted to provide wireless communication over a radio link 105 to a wireless communication device 110 such as e.g. a cellular telephone, a Personal Digital Assistant (PDA), a wireless computer etc.. The wireless communication system 100 may e.g. be a cellular communication system.

The wireless communication system 100 may further be connected to an infrastructure network 115 such as e.g. the Public Switched Telephone Network (PSTN), an IP network, a wireless core network or a radio access network. The present solution may be applicable to any wireless communication system with more than four transmit antenna elements at the base station, such as e.g. GSM, TD-SCDMA, WCDMA, CDMA-2000, LTE, IEEE802.16, IEEE802.11n and standards alike.

The wireless communication system 100 comprises an antenna array 120 and a network node 130 as depicted in Figure 1

The antenna array 120, also known as the existing antenna array, may e.g. be arranged at an antenna site in an antenna tower as seen in the example of Figure 1 or on a high building. The antenna array 120 may be internal or external to a base station 140, such as e.g. a Node-B, an enhanced Node-B, a Radio Base Station (RBS), a Base Transceiver Station (BTS), a Radio Remote Unit (RRU), a Main Remote Unit (MRU) or any other suitable node adapted to communicate over a radio link. **Figure 2** depicts the antenna array 120 according to some embodiments of the present solution. The antenna array 120 is deployed with a first sectorization. Examples of sectorization orders include e.g. one, two, three or six.

The antenna array 120 may comprise a number n of antenna elements. The number n of antenna elements must be two or larger. According to some embodiments the antenna array 120 comprises at least four antenna elements. As depicted in Figure 2 the antenna array 120 may comprise eight antenna elements 201-208.

The antenna elements 201-208 may be adapted to transmit and receive signals. At transmission, the signals transmitted from the different antenna elements can be formed by encoding and scaling the underlying signals with signal and antenna specific complex weights. The weights can be selected according to the multi antenna mode used, such as e.g. beamforming, precoding, spatial multiplexing, spatial diversity, etc. Such schemes are suitable for varying degrees of channel knowledge and channel conditions, the signals are transmitted in the best directions in multiple directions and in all directions respectively. At reception, different versions of the same transmitted signal and/or signals are received by the antenna elements and these can be combined taking the channel properties into account. This is also known by receive diversity and is commonly used to improve the received signal quality since by using more antennas, more energy is collected and the reliability can be improved since it can be less probable that the signal received by all antennas are of low quality at the same time.

The antenna elements 201-208 of the antenna array 120 may be configured to have a circular or linear or any two dimensional or three dimensional appearances and/or shape adapted for wireless communication such as e.g. a beam-forming Time Division Duplexing (TDD) system, a GSM.

The antenna elements 201-208 are arranged for a geographical coverage of a first sector, such as e.g. an area or a physical sector. According to some embodiments the antenna array 120 serves a cell 150, as depicted in Figure 1. The cell 150 depicted in Figure 1 is omni directional.

**Figure 3** depicts the network node 130, also known as a beamforming network, according to some embodiments. The network node 130 is adapted to be connected to the antenna array 120. The network node 130 comprises a first number n of signal connections, also known as outputs, where each of the first signal connections is adapted to transmit and receive signals e.g. to the antenna array 120. As depicted in Figure 3 there may be eight signal connections 301-308. The number n of signal connections may be connected to the number n of antenna elements of the antenna array 120. As depicted in Figure 3, the antenna element 201 may be connected to the signal connection 301, the antenna element 202 may be connected to the signal connection 302, etc. The network node 130 may thus be adapted to transmit and receive signals to and from each antenna element of the antenna array 120 via the first number of signal connections.

The network node 130 further comprises a second number n of signal connections, also known as inputs. Each of the second signal connections is adapted to transmit and/or receive signals for one of the respective number n of the antenna elements. The second number n of signal connections may be adapted to be connected to the base station 140. The second number n of signal connections may be adapted to be connected to the antenna ports of two virtual sectors served by the base station 140. The second number of signal connections may be eight. The exemplary scenario of eight second number of signal connections 311-318 is shown in Figure 3. Figure 3 further depicts the example of how a signal coming from the base station 140 intended for the first antenna element 201 of the antenna array will be received from the base station 140 by the connection 311 to be signal processed by the network node 130, as will be further described below, thereafter transmitted via the connection 310 to the antenna element 201. The same principle is valid for the signals coming from the base station 140 intended for the antenna elements 202-208 respectively of the antenna array 120 which will be received from the base station 140 by the connections 312-318 respectively, as will be further described below.

The network node 130 may be represented by a base band signal processing unit.

The network node 130 may be co-located with the antenna array 120, or located between the antenna array 120 and the base station 140, or the network node 130 may be co-located with the base station 140. According to some embodiments the network node 130 performs pre-antenna processing. The network node 130 may be realized as a hardware element in the shape of e.g. a connection net which may be located after a power amplifier when the network node 130 is co-located with the base station 140. The network node 130 may be implemented digitally as part of the baseband processing internal to the base station 140.

The present solution provides a method in the network node 130 for increasing a sectorization order in a first sector, known as an original sector, of the antenna array 120, wherein the network node 130 and the antenna array 120 are comprised in the wireless communication system 120, as mentioned above. According to some embodiments a method in the network node 130 for sector splitting in a beam-forming Time Division Duplexing (TDD) network with more than four transmit antennas at base station is provided.

This is highly attractive for a telecommunication operator who wants to migrate e.g. his existing TD-SCDMA system into a LTE by reuse of the existing antenna elements at the antenna sites. Each TD-SCDMA physical sector may be deployed with eight antenna elements 201-208 in the antenna array 120, whereas the present specifications of the LTE system only has support of four antenna connections. This is due to the fact that common reference signals are used and there are only four of them in the LTE system. The LTE system with its common reference signal approach is designed with only four antenna elements in each antenna array in mind.

Thus the present solution presents a way to utilize all eight existing antennas of the antenna array 120 by reusing the antenna elements of the 3G TD-SCDMA system when migrating to a 4G system such as e.g. LTE. The present solution comprises creating a two, or more, virtual sectors out of each original physical sector. This will be explained in further detail below and depicted in accompanying Figures. Each virtual sector may then have four, or less, virtual antennas. This sector splitting method results in that there are twice as many, or more, virtual sectors as there are original physical sectors. Each original physical sector may be split in half, or even smaller sections, and covered by two, or more, corresponding virtual sectors.

The present solution is highly advantageous since the physical elements, i.e. the antenna elements of the antenna array, may be in continuous use thus avoiding the high costs of investing in new antenna elements and the corresponding costs of labor performing the antenna exchange.

As is well known, higher order sectorization improves performance similar to spatial multiplexing since the same time and frequency resource may be used in both sectors serving different users in the two cells at the same time. Ideally, the system capacity could be doubled by splitting the sector in two virtual sectors ad using the same resource in both sectors at the same time. However, in practice there some interference between the sectors will exist, which makes the gain less than a factor of two.

Thus the antenna element reuse of the present solution is also advantageous when experiencing a shortage of capacity. In the high load scenarios, sometimes a resource upper bound might be reached before the system is limited by the performance, i.e. the interference, which ends to resource limit within a cell. The separation of the sectors increase the resource upper bound by almost the double, thus improve the capacity significantly. Thus the present solution may be very useful in urban areas experiencing capacity shortage.

Additionally, the intercell interference variations may be lower, for example due to the fact that a less adaptive transmitter scheme is used within each virtual sector with a smaller number of antennas.

The solution will hereafter be described referring to e.g. the TD-SCDMA system of eight antenna elements in each antenna array and the LTE system of four antenna elements in each antenna array, although it is applicable to other standards as well, as mentioned above. The present solution is also applicable to other antenna arrangements.

The present solution will now be described with reference to Figure 3, **Figures 4a-4b, Figures 5a-5b and Figure 6.**

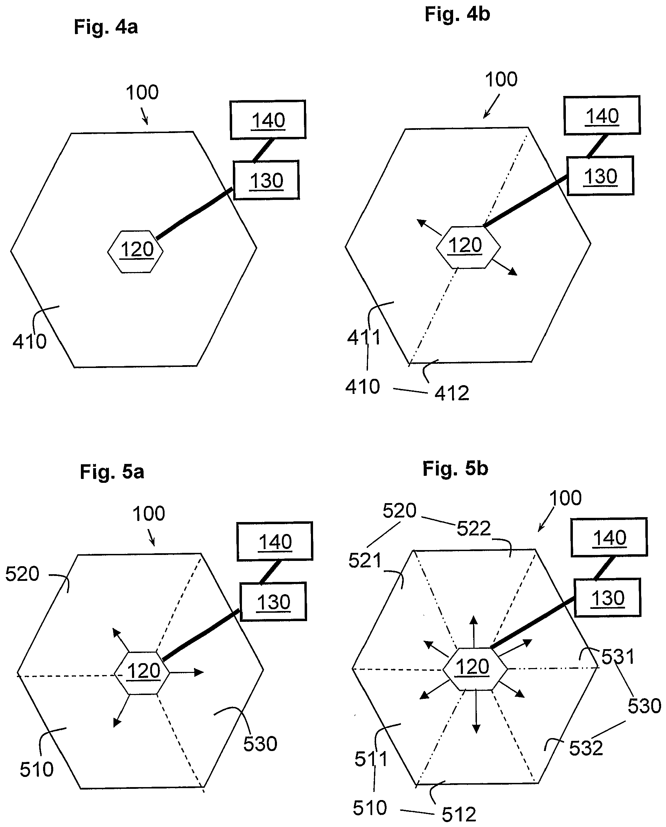

Figures 4a-4b depict embodiments of an single sector wireless communication network 100, as seen from above, wherein the antenna array 120 is adapted to transmit and receive signals omni-directionally in the first sector 410. Figure 4a depicts the communication network 100 before the method according to the present solution is preformed. Figure 4b depicts the communication network 100 after the method according to the present solution is preformed. The first sector 410 is a physical sector such as e.g. a cell. The created virtual sectors 411 and 412 are delimited by dash dot lines in Figure 4b.

Figures 5a-5b depict embodiments of an existing three-sector wireless communication network 100 as seen from above, wherein a first antenna array 120 is adapted to transmit and receive signals in a first sector 510, a second antenna array 120 is adapted to transmit and receive signals in a second sector 520 and a third antenna array 120 is adapted to transmit and receive signals in a third sector 530. The first sector 510, the second sector 520 and the third sector 530 are physical sectors, such as e.g. cells. The physical sectors 510, 520, 520 are delimited by dashed lines in Figure 5b. The created virtual sectors 511, 512 and 521, 522 and 531, 532 are delimited by dash dot lines in Figure 5b.

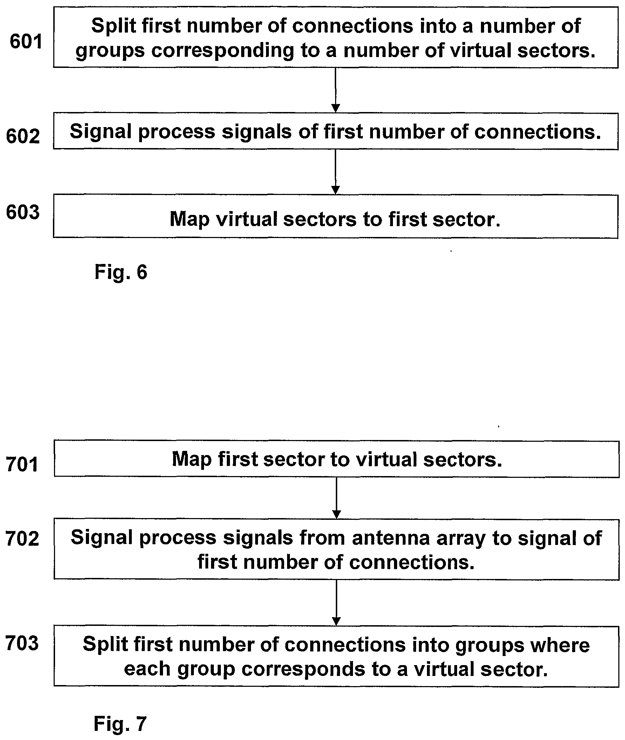

Figure 6 presents a flow chart illustrating method steps according to the present solution. Figure 6 refers to embodiments concerning transmission.

601. The first step of the method is for the network node 130 to perform splitting of the first number n of connections into a number k of groups. Each one of the respective connection groups corresponds to one respective virtual sector, resulting in a number k of virtual sectors.

According to some embodiments the n connections may be split into k groups with n/k connections each. According to other embodiments the n connections may be distributed and/or used in each of the k groups.

According to some embodiments each virtual sector corresponds to a cell in a cellular communication system.

According to some embodiments as depicted in Figure 3 and Figures 4a and 4b n equals eight and k equals two. As depicted in Figure 3 the eight connections 301-308 are split into two groups 321 and 322. As seen in Figure 4b the first group 321 may then correspond to the respective virtual sector 411 and the second group 322 may correspond to the respective virtual sector 412. Thus the first sector 410, being depicted in Figure 4a, may be split into two virtual sectors 411, 412, as depicted in Figure 4b, and each said connection group 321, 322, as depicted in Figure 3, may comprise four connections. The first connection group 321 may comprise the four connections 311-314 and the second connection group 322 may comprise the four connections 315-318.

The method according to the present solution may also be performed as described above in the three sector wireless communication system being depicted by Figure 5a to result in the six virtual sector wireless communication system of Figure 5b. Thus the first sector 510 may be split into two virtual sectors 511, 512 and the second sector 520 may be split into two virtual sectors 521, 522, and the third sector 530 may be split into two virtual sectors 531, 532, whereby the respective connection groups comprise four connections each, as described above.

According to some embodiments k may equal four. In the embodiment wherein there are eight antenna elements 201-208 this results in that the first sector may be split into four virtual sectors and each said connection group may comprise two connections (not shown in any Figure).

602. Referring again to the flowchart of Figure 6 the method may also comprise the step of signal processing the signals corresponding to said first number n of signal connections. The signal processing may enable each said group of signals to be transmitted in one respective virtual sector.

The signal processing may be performed by altering the phases and/or the amplitudes of the signals corresponding to said first number n of signal connections and forming linear combinations of said altered signals.

According to some embodiments depicted in Figure 3 and Figures 4a-4b n equals eight and k equals two. Thus the signals corresponding to the eight connections 301-308 may be signal processed. The performed signal processing may enable the first group 321 of signals, as depicted in Figure 3, to be transmitted in the first virtual sector 411, as depicted in Figure 4b, and the second group 322 of signals, as depicted in Figure 3, is enabled to be transmitted in the second virtual sector 412, as depicted in Figure 4b.

The signal processing required to enable the splitting and mapping to the first sector when transmitting may be described mathematically as follows. According to some embodiments the antenna array 120 consists of eight antennas 201-208 and the first sector 410 is to be split into two virtual sectors 411, 412 of four virtual antennas each 311-314, 315-318. Furthermore, let the vector y represent the transmitted signal from the antenna array 120 covering the first sector 410 and let the vector

$$\mathbf{x} = \begin{bmatrix} \mathbf{x}_1 \\ \mathbf{x}_2 \end{bmatrix}$$

correspond to the signal on the first signal connections 301-308. Here, $\mathbf{x}_1$ and $\mathbf{x}_2$ represent the signal vectors for the two groups of signals 321, 322 corresponding to the first virtual sector 411 and the second virtual sector 412, respectively. The two groups of signals 321, 322 are mapped to the first sector 410 by means of signal processing that can be modeled by the matrix multiplication

$$\mathbf{y} = \mathbf{W}\begin{bmatrix} \mathbf{x}_1 \\ \mathbf{x}_2 \end{bmatrix} = \begin{bmatrix} \mathbf{W}_1 & \mathbf{W}_2 \end{bmatrix}\begin{bmatrix} \mathbf{x}_1 \\ \mathbf{x}_2 \end{bmatrix} = \mathbf{W}_1\mathbf{x}_1 + \mathbf{W}_2\mathbf{x}_2$$

where the matrix W can be decomposed into

$$\mathbf{W}_1 = \begin{bmatrix} W_{11} & W_{12} & W_{13} & W_{14} \\ W_{21} & W_{22} & W_{23} & W_{24} \\ W_{31} & W_{32} & W_{33} & W_{34} \\ W_{41} & W_{42} & W_{43} & W_{44} \\ W_{51} & W_{52} & W_{53} & W_{54} \\ W_{61} & W_{62} & W_{63} & W_{64} \\ W_{71} & W_{72} & W_{73} & W_{74} \\ W_{81} & W_{82} & W_{83} & W_{84} \end{bmatrix}, \quad \mathbf{W}_2 = \begin{bmatrix} W_{15} & W_{16} & W_{17} & W_{18} \\ W_{25} & W_{26} & W_{27} & W_{28} \\ W_{35} & W_{36} & W_{37} & W_{38} \\ W_{45} & W_{46} & W_{47} & W_{48} \\ W_{55} & W_{56} & W_{57} & W_{58} \\ W_{65} & W_{66} & W_{67} & W_{68} \\ W_{75} & W_{76} & W_{77} & W_{78} \\ W_{85} & W_{86} & W_{87} & W_{88} \end{bmatrix}$$

and is used for altering the phases and/or amplitudes of the signals in x and forming linear combinations of the altered signals. By an appropriate choice of the complex-valued scalar elements $\{W_{kl}\}$, the signals for the first (second) virtual sector can be steered to geographically cover the area intended for the first (second) virtual sector while at the same time keeping the interference between the two virtual sectors at a low level.

According to some embodiments depicted in Figure 3 and Figures 5a-5b the present solution enables a virtual split from three physical sectors 510, 520, 530 to six virtual sectors 511, 512, 521, 522, 531, 532, wherein the virtual sectors 511, 512, 521, 522, 531, 532 may correspond to six cells. To properly reuse the existing antenna arrangement of the antenna array 120, the signal processing requires to take into account that the antenna diagrams are tailored for a three-sector deployment, i.e. corresponding to a coverage of 120 degrees, while conventional six sectors systems should ideally use antennas with antenna diagrams aimed for half as wide sectors, i.e. corresponding to a coverage of 60 degrees. Thus, the signal processing takes this into account by designing beam weights used to form the linear combinations carefully to control the isolation between the resulting sectors. That results in that the interference between any two neighboring virtual sectors is small even though the antenna diagrams of the n antenna elements of the antenna array 120 cover both virtual sectors.

Further may each split small virtual sector adopt some less adaptive multi-antenna or even single-antenna technologies with improving both the system performance and the system robustness against the feedback delay and the non-stationary interference.

603. Referring again to the flow chart of Figure 6, the network node 130 performs mapping of the number k of virtual sectors to the first sector 410, such that the first sector 410 is split into the number k of virtual sectors. The mapping may further comprise mapping of virtual antennas to the physical antennas. In the example of Figure 3 the four virtual antennas 311, 312, 313, 314 of the first virtual sector are mapped to the four antenna elements 201,201, 203, 204.

The lobes of the k virtual sectors may be narrower than the lobe of the first physical sector 410, since the k virtual sectors are adapted to cover a part of the same area as the first physical sector 410. A narrower lobe is advantageous since it results in an enhanced array gain and it also enables a reduced interference.

According to some embodiments as depicted in Figure 3 and Figures 4a-4b n equals eight and k equals two. Thus the two virtual sectors 411-412 are mapped to the first sector 410 such that the first sector 410 is split into a first virtual sector 411 and a second virtual sector 412.

According to some embodiments k may equal four. In the embodiment wherein there are eight antenna elements 201-208 this results in that four virtual sectors are mapped to the first sector 410 such that the first sector 410 is split into a first virtual sector, a second virtual sector, a third virtual sector and a fourth virtual sector (not shown in any Figure).

Each virtual sector of the k virtual sectors may thereby be operated by n/k virtual antenna elements. According to some embodiments wherein n equals eight and k equals two the first virtual sector 411 may be operated by four virtual antenna elements 311, 312, 313, 314 corresponding to the antenna elements 201-204 and the second virtual sector 412 may be operated by four virtual antenna elements 315, 316, 317, 318 corresponding to the antenna elements 205-208.

According to some embodiments, not shown in any Figure, the first virtual sector 411 may be operated with four virtual antennas 311, 312, 313, 314 which in turn use all the physical antenna elements 201-208 with one set of complex beam forming weights. Further the second virtual sector 412 may be operated with four virtual antennas 315, 316, 317, 318 which also use all the physical antenna elements 201-208 with a second set of complex beam forming weights.

The method may also be performed when receiving, i.e. in the reverse direction.

Figure 7 presents a flow chart illustrating method steps according to the present solution. Figure 7 refers to embodiments concerning reception.

701. The first step of the method, when being performed for reception, is for the network node 130 to perform mapping by mapping the first sector 410 to the number of virtual sectors 411-412 such that the first sector 410 is split into the number of virtual sectors 411-412. The mapping may further comprise mapping of physical antennas to the virtual antennas. This step is described in reverse in step 603 above.

702. Referring again to the flowchart of Figure 7 the method may also comprise the step of signal processing the signals from the antenna array 120 corresponding to the first sector 410 to signals of the first number n of signal connections. The signal processing may enable each said group 321-322 of signals is adapted to be receiving signals in one respective virtual sector 411-412.

The signal processing may be performed by altering the phases and/or the amplitudes of the signals corresponding to said first number n of signal connections and forming linear combinations of said altered signals. Examples of receiving algorithms are e.g. $x\_est = f(W)y$, e.g. $f(W)=W^T$, or $f(W)=(W^T(W^T W + var(N) I) ^ -1) x, x=W^T y$.

This enables the reuse of exactly the same analog radio frequency hardware, such as e.g. attenuators and phase shifters, in both transmitting and receiving directions.

703. Referring again to the flow chart of Figure 7, the network node 130 performs splitting of the first number n of connections into a number k of groups. Each one of the respective connection groups corresponds to one respective virtual sector, resulting in a number k of virtual sectors. This step is described in further detail in section 601 above.

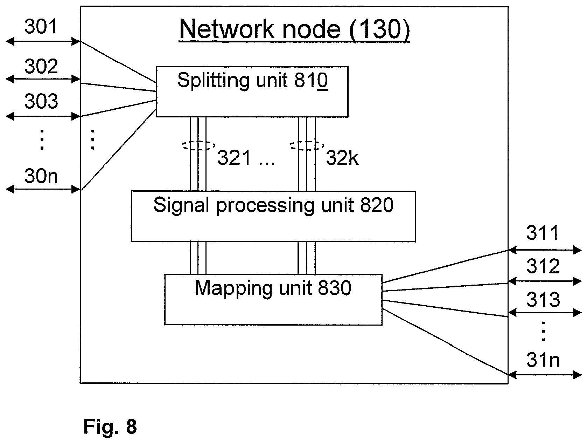

To perform the method as described above, the network node 130 comprises the following arrangements, as depicted in **Figure 8**.

As depicted in Figure 8 the network node 130 comprises a first number n of signal connections. Each signal connection is adapted to transmit and/or receive signals.

Further the network node 130 may comprise a second number n of signal connections. Each signal connection is adapted to transmit and/or receive signals for one of the respective number n of antenna elements.

The network node 130 further comprises a splitting unit 810 adapted to split the first number n of connections into a number k of groups. Each one of the respective connection groups corresponds to one respective virtual sector, resulting in a number k of virtual sectors.

The network node 130 may further comprise a signal processing unit 820 adapted to signal process the signals corresponding to said first number n of signal connections, such that each group of signals is adapted to be transmitted in one respective virtual sector. The signal processing unit 820 may further be adapted to signal process the signals from the said antenna array 120 corresponding to the first sector 410, such that each said group 321-322 of signals is adapted to be receiving signals from one respective virtual sector 411-412.

The signal processing unit 820 may be adapted to alter the phases and/or the amplitudes of the signals corresponding to said first number n of signal connections and by forming linear combinations of said altered signals.

The network node 130 further comprises a mapping unit 830 adapted to map the number k of virtual sectors to the first sector 410, such that the first sector 410 is split into the number k of virtual sectors. The mapping unit 830 may be further adapted to map the first sector 410 to the number of virtual sectors 411-412 such that the first sector 410 is split into the number k of virtual sectors 411-412.

The present method for increasing a sectorization order in a first sector 410 of an antenna array 120 may be implemented through one or more arrangements such as the network node 130 as depicted in Figures 3 and 8, together with computer program code for performing the functions of the invention. The program code mentioned above may also be provided as a computer program product, for instance in the form of a data carrier carrying computer program code for performing the present method when being loaded into the base station 140 and/or the antenna array 120 of the wireless communication network 100. One such carrier may be in the form of a CD ROM disc. It is however feasible with other data carriers such as a memory stick. The computer program code can furthermore be provided as pure program code on a server and downloaded to the antenna array 120 and/or the base station 140 remotely.

The present invention is not limited to the above-describe preferred embodiments. Various alternatives, modifications and equivalents may be used. Therefore, the above embodiments should not be taken as limiting the scope of the invention, which is defined by the appending claims.

One exemplary embodiment of the method is increasing the sectorization order using existing antenna arrays deployed with a certain sectorization. The increase in sectorization is realized by a beamforming network mapping a number of virtual sectors to a single original sector. The beamforming network comprises a number of outputs connected to the existing antenna array and a number of inputs divided into groups and where each group corresponds to a virtual sector.

One exemplary embodiment is a beamforming network comprising a number of connections for receiving or outputing base band signals for a corresponding number of antenna elements, and wherein the antenna elements are arranged for a geographical coverage on a first sector. The beamforming network may further comprise a number of connections for outputting or receiving a first and a second group of signals; wherein the beamforming network is arranged to signal processing the first group of signals to be received or transmitted in the first virtual sector and the second group of signals to be received or transmitted in the second virtual sector thereby splitting the first sector into at least the first and second virtual sectors.

**Claims**

1.  A method in a network node (130) for increasing a sectorization order in a first sector (410) of an antenna array (120), the network node (130) and antenna array (120) being comprised in a wireless communication system (100), the antenna array (120) being deployed with a first sectorization, the network node (130) further comprising a first number of signal connections (301-308) where each signal connection (301-308) is adapted to transmit and receive signals to and from the antenna array (120), the method being **characterized by**:

    splitting (601, 703) the first number of signal connections (301-308) into a number of connection groups (321-322) resulting in a number of virtual sectors (411-412), wherein each one of the respective connection groups (321-322) corresponds to one respective virtual sector (411, 412), and
    mapping (603) the number of virtual sectors (411-412) to the first sector (410), such that the first sector (410) is split into the number of virtual sectors (411-412), wherein the first sector (410) is split into two virtual sectors (411-412) and said each one of the respective connection groups (321-322) corresponding to the one respective virtual sector (411, 412) comprises four signal connections to transmit and receive the signals to and from the antenna array (120), and wherein the network node (130) is located between the antenna array (120) and a base station (140) comprised in the wireless communication system (100).

2.  The method according to claim 1, further comprising the step of:
    signal processing (602) the signals corresponding to said first number of signal connections (301-308), such that each said connection group (321-322) of signals is adapted to be transmitted in one respective virtual sector (411-412).

3.  The method according to any of the claims 1-2, further comprising the step of:
    signal processing (702) the signals from said antenna array (120) corresponding to the first sector (410) such that each said connection group (321-322) of signals is adapted to be receiving signals from one respective virtual sector (411-412),
    and wherein the step of mapping is performed by mapping (701) the first sector (410) to the number of virtual sectors (411-412) such that the first sector (410) is split into the number of virtual sectors (411-412).

4.  The method according to any of the claims 1-3, wherein the signal processing is performed by altering the phases and/or the amplitudes of the signals corresponding to said first number of signal connections (301-308) and forming linear combinations of said altered signals.

5.  The method according to any of the claims 1-4, wherein each virtual sector (411-412) corresponds to a cell in a cellular network/communication system.

6.  A network node (130) for increasing a sectorization order in a first sector (410) of an antenna array (120), the network node (130) and antenna array (120) being comprised in a wireless communication system (100), the antenna array (120) being deployed with a first sectorization, the network node (130) being adapted to be connected to the antenna array (120), the network node (130) further comprising a first number of signal connections (301-308) where each signal connection (301-308) is adapted to transmit and/or receive signals to and/or from the antenna array (120), the network node (130) being **characterized by**:

    a splitting unit (810) adapted to split the first number of signal connections (301-308) into a number of connection groups (321-322) resulting in a number of virtual sectors (411, 412), wherein each one of the respective connection groups (321, 322) corresponds to one respective virtual sector (411, 412), and
    a mapping unit (830) adapted to map the number of virtual sectors (411, 412) to the first sector (410), such that the first sector (410) is split into the number of virtual sectors (411, 412), wherein the first sector (410) is split into two virtual sectors (411, 412) and said each one of the respective connection groups (321, 322) corresponding to the one respective virtual sector (411, 412) comprises four signal connections to transmit and receive the signals to and from the antenna array (120), and wherein the network node (130) is located between the antenna array (120) and a base station (140) comprised in the wireless communication system (100).

7. The network node (130) according to claim 6, wherein the antenna array (120) comprises a number of antenna elements (201-208), the network node (120) further comprising:
a second number of signal connections (311-318) where each signal connection (311-318) is adapted to transmit and/or receive signals for one of the respective number of antenna elements (201-208), and wherein the antenna elements (201-208) are arranged for a geographical coverage of the first sector (410).

8. The network node (130) according to any of the claims 6-7, further comprising a signal processing unit (820) adapted to signal process the signals corresponding to said first number of signal connections (301-308), such that each connection group (321-322) of signals is adapted to be transmitted in one respective virtual sector (411, 412).

9. The network node (130) according to any of the claims 6-7, wherein the signal processing unit (820) is further adapted to signal process the signals from said antenna array (120) corresponding to the first sector (410), such that each said connection group (321-322) of signals is adapted to be receiving signals from one respective virtual sector (411,412),
and wherein the mapping unit (830) is further adapted to map the first sector (410) to the number of virtual sectors (411-412) such that the first sector (410) is split into the number of virtual sectors (411-412).

10. The network node (130) according to any of the claims 6-9, wherein the antenna array (120) comprises eight antenna elements (201-208).

11. The network node (130) according to any of the claims 8-10, wherein the signal processing unit (820) alters the phases and/or the amplitudes of the signals corresponding to said first number of signal connections (301-308) and forms linear combinations of said altered signals.

12. The network node (130) according to any of the claims 6-11, wherein the wireless communication system (100) is a cellular communication system.

**Patentansprüche**

1. Verfahren in einem Netzknoten (130) zum Erhöhen einer Sektorenaufteilungsordnung in einem ersten Sektor (410) einer Antennengruppe (120), wobei der Netzknoten (130) und die Antennengruppe (120) in einem drahtlosen Kommunikationssystem (100) enthalten sind, wobei die Antennengruppe (120) mit einer ersten Sektorenaufteilung eingerichtet ist, wobei der Netzknoten (130) ferner eine erste Anzahl von Signalverbindungen (301-308) umfasst, wobei jede Signalverbindung (301-308) dazu angepasst ist, Signale an die Antennengruppe (120) zu übertragen und von dieser zu empfangen, wobei das Verfahren durch Folgendes gekennzeichnet ist:

Teilen (601, 703) der ersten Anzahl von Signalverbindungen (301-308) in eine Anzahl von Verbindungsgruppen (321-322), was in einer Anzahl von virtuellen Sektoren (411-412) resultiert, wobei jede einzelne der jeweiligen Verbindungsgruppen (321-322) einem entsprechenden virtuellen Sektor (411, 412) entspricht, und
Zuordnen (603) der Anzahl von virtuellen Sektoren (411-412) zu dem ersten Sektor (410), sodass der erste Sektor (410) in die Anzahl von virtuellen Sektoren (411-412) geteilt ist, wobei der erste Sektor (410) in zwei virtuelle Sektoren (411-412) geteilt ist und jede einzelne der jeweiligen Verbindungsgruppen (321-322) entsprechend dem einen jeweiligen virtuellen Sektor (411, 412) vier Signalverbindungen umfasst, um die Signale an die Antennengruppe (120) zu übertragen und von dieser zu empfangen, und wobei sich der Netzknoten (130) zwischen der Antennengruppe (120) und einer Basisstation (140), die in dem drahtlosen Kommunikationssystem (100) umfasst ist, befindet.

2. Verfahren nach Anspruch 1, ferner umfassend den folgenden Schritt:
Signalverarbeiten (602) der Signale entsprechend der ersten Anzahl von Signalverbindungen (301-308), sodass jede Verbindungsgruppe (321-322) von Signalen dazu angepasst ist, in einem jeweiligen virtuellen Sektor (411-412) übertragen zu werden.

**3.** Verfahren nach einem der Ansprüche 1-2, umfassend den folgenden Schritt:

Signalverarbeiten (702) der Signale von der Antennengruppe (120) entsprechend dem ersten Sektor (410), sodass jede Verbindungsgruppe (321-322) von Signalen dazu angepasst ist, Signale von einem jeweiligen virtuellen Sektor (411-412) zu empfangen,
und wobei der Schritt des Zuordnens durch Zuordnen (701) des ersten Sektors (410) zu der Anzahl von virtuellen Sektoren (411-412) durchgeführt wird, sodass der erste Sektor (410) in die Anzahl von virtuellen Sektoren (411-412) aufgeteilt ist.

**4.** Verfahren nach einem der Ansprüche 1-3, wobei die Signalverarbeitung durch Ändern der Phasen und/oder der Amplituden der Signale entsprechend der ersten Anzahl von Signalverbindungen (301-308) und Bilden von linearen Kombinationen der geänderten Signale durchgeführt wird.

**5.** Verfahren nach einem der Ansprüche 1-4, wobei jeder virtuelle Sektor (411-412) einer Zelle in einem zellularen Netz/Kommunikationssystem entspricht.

**6.** Netzknoten (130) zum Erhöhen einer Sektorenaufteilungsordnung in einem ersten Sektor (410) einer Antennengruppe (120), wobei der Netzknoten (130) und die Antennengruppe (120) in einem drahtlosen Kommunikationssystem (100) enthalten sind, wobei die Antennengruppe (120) mit einer ersten Sektorenaufteilung eingerichtet ist, wobei der Netzknoten (130) dazu angepasst ist, mit der Antennengruppe (120) verbunden zu werden, wobei der Netzknoten (130) ferner eine erste Anzahl von Signalverbindungen (301-308) umfasst, wobei jede Signalverbindung (301-308) dazu angepasst ist, Signale an die Antennengruppe (120) zu übertragen und/oder von dieser zu empfangen, wobei der Netzknoten (130) durch Folgendes gekennzeichnet ist:

eine Teilungseinheit (810), die dazu angepasst ist, die erste Anzahl von Signalverbindungen (301-308) in eine Anzahl von Verbindungsgruppen (321-322) zu teilen, was in einer Anzahl von virtuellen Sektoren (411, 412) resultiert, wobei jede einzelne der jeweiligen Verbindungsgruppen (321, 322) einem entsprechenden virtuellen Sektor (411, 412) entspricht, und
eine Zuordnungseinheit (830), die dazu angepasst ist, die Anzahl von virtuellen Sektoren (411, 412) zu dem ersten Sektor (410) zuzuordnen, sodass der erste Sektor (410) in die Anzahl von virtuellen Sektoren (411, 412) geteilt ist, wobei der erste Sektor (410) in zwei virtuelle Sektoren (411, 412) geteilt ist und jede einzelne der jeweiligen Verbindungsgruppen (321, 322) entsprechend dem einen jeweiligen virtuellen Sektor (411, 412) vier Signalverbindungen umfasst, um die Signale an die Antennengruppe (120) zu übertragen und von dieser zu empfangen, und wobei sich der Netzknoten (130) zwischen der Antennengruppe (120) und einer Basisstation (140), die in dem drahtlosen Kommunikationssystem (100) umfasst ist, befindet.

**7.** Netzknoten (130) nach Anspruch 6, wobei die Antennengruppe (120) eine Anzahl von Antennenelementen (201-208) umfasst, wobei der Netzknoten (120) ferner Folgendes umfasst:
eine zweite Anzahl von Signalverbindungen (311-318), wobei jede Signalverbindung (311-318) dazu angepasst ist, Signale für eine aus der jeweiligen Anzahl von Antennenelementen (201-208) zu übertragen und/oder zu empfangen, und wobei die Antennenelemente (201-208) für eine geografische Abdeckung des ersten Sektors (410) angeordnet sind.

**8.** Netzknoten (130) nach einem der Ansprüche 6-7, ferner umfassend eine Signalverarbeitungseinheit (820), die dazu angepasst ist, die Signale entsprechend der ersten Anzahl von Signalverbindungen (301-308) signalzuverarbeiten, sodass jede Verbindungsgruppe (321-322) von Signalen dazu angepasst ist, in einem jeweiligen virtuellen Sektor (411, 412) übertragen zu werden.

**9.** Netzknoten (130) nach einem der Ansprüche 6-7, wobei die Signalverarbeitungseinheit (820) ferner dazu angepasst ist, die Signale von der Antennengruppe (120) entsprechend dem ersten Sektor (410) signalzuverarbeiten, sodass jede Verbindungsgruppe (321-322) von Signalen dazu angepasst ist, Signale von einem jeweiligen virtuellen Sektor (411, 412) zu empfangen,
und wobei die Zuordnungseinheit (830) ferner dazu angepasst ist, den ersten Sektor (410) zu der Anzahl von virtuellen Sektoren (411-412) zuzuordnen, sodass der erste Sektor (410) in die Anzahl von virtuellen Sektoren (411-412) aufgeteilt ist.

**10.** Netzknoten (130) nach einem der Ansprüche 6-9, wobei die Antennengruppe (120) acht Antennenelemente (201-208) umfasst.

**11.** Netzknoten (130) nach einem der Ansprüche 8-10, wobei die Signalverarbeitungseinheit (820) die Phasen und/oder die Amplituden der Signale entsprechend der ersten Anzahl von Signalverbindungen (301-308) ändert und lineare Kombinationen der geänderten Signale bildet.

**12.** Netzknoten (130) nach einem der Ansprüche 6-11, wobei das drahtlose Kommunikationssystem (100) ein zellulares Kommunikationssystem ist.


**Revendications**

**1.** Procédé dans un noeud de réseau (130) destiné à augmenter un ordre de sectorisation dans un premier secteur (410) d'une antenne réseau (120), le noeud de réseau (130) et l'antenne réseau (120) étant inclus dans un système de communication sans fil (100), l'antenne réseau (120) étant déployée avec une première sectorisation, le noeud de réseau (130) comprenant en outre un premier nombre de connexions de signaux (301-308) dans lequel chaque connexion de signaux (301-308) est adaptée pour émettre et recevoir des signaux vers et depuis l'antenne réseau (120), le procédé étant **caractérisé par** :

la division (601, 703) du premier nombre de connexions de signaux (301-308) en plusieurs groupes de connexion (321-322) résultant en un nombre de secteurs virtuels (411-412), dans lequel chaque groupe de connexion respectif (321-322) correspond à un secteur virtuel respectif (411, 412), et
le mappage (603) du nombre de secteurs virtuels (411-412) par rapport au premier secteur (410), de sorte que le premier secteur (410) est divisé en plusieurs secteurs virtuels (411-412), dans lequel le premier secteur (410) est divisé en deux secteurs virtuels (411-412) et chaque groupe de connexion respectif (321-322) correspondant au secteur virtuel respectif (411,412) comprend quatre connexions de signaux afin d'émettre et de recevoir les signaux vers et depuis l'antenne réseau (120), et dans lequel le noeud de réseau (130) est situé entre l'antenne réseau (120) et une station de de base (140) incluse dans le système de communication sans fil (100).

**2.** Procédé selon la revendication 1, comprenant en outre les étapes consistant à :
effectuer un traitement de signal (602) des signaux correspondant audit premier nombre de connexions de signaux (301-308), de sorte que chaque groupe de connexion (321-322) de signaux est adapté pour être émis dans un secteur virtuel respectif (411-412).

**3.** Procédé selon l'une quelconque des revendications 1 à 2, comprenant en outre l'étape consistant à :

effectuer un traitement de signal (702) des signaux provenant de ladite antenne réseau (120) correspondant au premier secteur (410) de sorte que chaque groupe de connexion (321-322) de signaux est adapté pour recevoir des signaux provenant d'un secteur virtuel respectif (411-412),
et dans lequel l'étape de mappage est réalisée en mappant (701) le premier secteur (410) par rapport au nombre de secteurs virtuels (411-412) de sorte que le premier secteur (410) est divisé en plusieurs secteurs virtuels (411-412).

**4.** Procédé selon l'une quelconque des revendications 1 à 3, dans lequel le traitement de signal est réalisé en modifiant les phases et/ou les amplitudes des signaux correspondant audit premier nombre de connexions de signaux (301-308) et en formant des combinaisons linéaires desdits signaux modifiés.

**5.** Procédé selon l'une quelconque des revendications 1 à 4, dans lequel chaque secteur virtuel (411-412) correspond à une cellule dans un réseau cellulaire/système de communication.

**6.** Noeud de réseau (130) destiné à augmenter un ordre de sectorisation dans un premier secteur (410) d'une antenne réseau (120), le noeud de réseau (130) et l'antenne réseau (120) étant inclus dans un système de communication sans fil (100), l'antenne réseau (120) étant déployée avec une première sectorisation, le noeud de réseau (130) étant adapté pour être connecté à l'antenne réseau (120), le noeud de réseau (130) comprenant en outre un premier nombre de connexions de signaux (301-308) dans lequel chaque connexion de signaux (301-308) est adaptée pour émettre et/ou recevoir des signaux vers et/ou depuis l'antenne réseau (120), le noeud de réseau (130) étant **caractérisé par** :

une unité de division (810) adaptée pour diviser le premier nombre de connexions de signaux (301-308) en plusieurs groupes de connexion (321-322) résultant en un nombre de secteurs virtuels (411, 412), dans lequel chaque groupe de connexion respectif (321, 322) correspond à un secteur virtuel respectif (411, 412), et une unité de mappage (830) adaptée pour mapper le nombre de secteurs virtuels (411, 412) par rapport au premier secteur (410), de sorte que le premier secteur (410) est divisé en plusieurs secteurs virtuels (411, 412), dans lequel le premier secteur (410) est divisé en deux secteurs virtuels (411, 412) et chaque groupe de connexion respectif (321, 322) correspondant au secteur virtuel respectif (411, 412) comprend quatre connexions de signaux pour émettre et recevoir les signaux vers et depuis l'antenne réseau (120), et dans lequel le noeud de réseau (130) est situé entre l'antenne réseau (120) et une station de base (140) incluse dans le système de communication sans fil (100).

7. Noeud de réseau (130) selon la revendication 6, dans lequel l'antenne réseau (120) comprend un nombre d'éléments d'antenne (201-208), le noeud de réseau (120) comprenant en outre :
un second nombre de connexions de signaux (311-318) dans lequel chaque connexion de signaux (311-318) est adaptée pour émettre et/ou recevoir des signaux pour l'un respectif des plusieurs éléments d'antenne (201-208), et dans lequel les éléments d'antenne (201-208) sont agencés pour une couverture géographique du premier secteur (410).

8. Noeud de réseau (130) selon l'une quelconque des revendications 6 à 7, comprenant en outre une unité de traitement de signal (820) adaptée pour effectuer un traitement de signal des signaux correspondant audit premier nombre de connexions de signaux (301-308), de sorte que chaque groupe de connexion (321-322) de signaux est adapté pour être émis dans un secteur virtuel respectif (411, 412).

9. Noeud de réseau (130) selon l'une quelconque des revendications 6 à 7, dans lequel l'unité de traitement de signal (820) est en outre adaptée pour effectuer un traitement de signal des signaux provenant de ladite antenne réseau (120) correspondant au premier secteur (410), de sorte que chaque groupe de connexion (321-322) de signaux est adapté pour recevoir des signaux provenant d'un secteur virtuel respectif (411, 412),
et dans lequel l'unité de mappage (830) est en outre adaptée pour mapper le premier secteur (410) par rapport au nombre de secteurs virtuels (411-412) de sorte que le premier secteur (410) est divisé en plusieurs secteurs virtuels (411-412) .

10. Noeud de réseau (130) selon l'une quelconque des revendications 6 à 9, dans lequel l'antenne réseau (120) comprend huit éléments d'antenne (201-208).

11. Noeud de réseau (130) selon l'une quelconque des revendications 8 à 10, dans lequel l'unité de traitement de signal (820) modifie les phases et/ou les amplitudes des signaux correspondant audit premier nombre de connexions de signaux (301-308) et forme des combinaisons linéaires desdits signaux modifiés.

12. Noeud de réseau (130) selon l'une quelconque des revendications 6 à 11, dans lequel le système de communication sans fil (100) est un système de communication cellulaire.

120
105
100
115
110
140
130
150

**Fig. 1**

201
202
203
204
205
206
207
208

120

**Fig. 2**

Network node 130

201 | 301
202 | 302
203 | 303
204 | 304
205 | 305
206 | 306
207 | 307
208 | 308

311
312
313
314
315
316
317
318

321
322

Base station 140

120

**Fig. 3**

**Fig. 4a**

100

140

130

120

410

**Fig. 4b**

100

140

130

120

411

410 — 412

**Fig. 5a**

100

140

130

120

520

510

530

**Fig. 5b**

520 — 522

100

140

130

521

120

531

530

511

532

510 — 512

601 | Split first number of connections into a number of groups corresponding to a number of virtual sectors.

602 | Signal process signals of first number of connections.

603 | Map virtual sectors to first sector.

**Fig. 6**

701 | Map first sector to virtual sectors.

702 | Signal process signals from antenna array to signal of first number of connections.

703 | Split first number of connections into groups where each group corresponds to a virtual sector.

**Fig. 7**

**Fig. 8**

**EP 2 127 439 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006286974 A1
- US 2002051436 A1